# EUROPÄISCHE PATENTSCHRIFT

(11) **EP 3 292 496 B1**
(45) Veröffentlichungstag und Bekanntmachung des Hinweises auf die Patenterteilung: **25.11.2020**
(21) Anmeldenummer: 16741870.6
(22) Anmeldetag: 27.06.2016
(51) Int. Cl.: G06F 21/33, H04L 29/06, H04L 9/32

(54) **VORRICHTUNG UND VERFAHREN ZUM VERWENDEN EINES KUNDEN-GERÄTE-ZERTIFIKATS AUF EINEM GERÄT**
APPARATUS AND METHOD FOR USING A CUSTOMER DEVICE CERTIFICATE ON A DEVICE
DISPOSITIF ET PROCÉDÉ D'EMPLOI D'UN CERTIFICAT D'APPAREIL DE CLIENT SUR UN APPAREIL

(30) Priorität: 31.07.2015 DE 102015214696
(43) Veröffentlichungstag der Anmeldung: 14.03.2018
(73) Patentinhaber: Siemens Mobility GmbH, 81739 München (DE)
(72) Erfinder: BROCKHAUS, Hendrik, 85579 Unterbiberg (DE); BUSSER, Jens-Uwe, 85579 Neubiberg (DE)
(86) Internationale Anmeldenummer: PCT/EP2016/064781
(87) Internationale Veröffentlichungsnummer: WO 2017/021059

(56) Entgegenhaltungen:
- US-A- 5 214 702
- US-B1- 8 850 208
- D Cooper ET AL: "Internet X.509 Public Key Infrastructure Certificate and Certificate Revocation List", The Internet Engineering Task Force, 1. Mai 2008 (2008-05-01), Seiten 54-71, XP055214380, Gefunden im Internet: URL:https://tools.ietf.org/pdf/rfc5280.pdf [gefunden am 2015-09-18]

## Beschreibung

Die vorliegende Erfindung betrifft eine Vorrichtung zum Verwenden eines Kunden-Geräte-Zertifikats auf einem Gerät. Des Weiteren betrifft die vorliegende Erfindung ein System mit einer solchen Vorrichtung. Darüber hinaus betrifft die vorliegende Erfindung ein Verfahren zum Verwenden eines Kunden-Geräte-Zertifikats auf einem Gerät.

In vielen Systemen, beispielsweise in Netzwerksystemen, kann eine sichere Identifikation von Geräten erforderlich sein. Eine solche Identifikation kann mittels digitaler Zertifikate erfolgen. Dies können beispielsweise typspezifische Zertifikate sein, bei denen alle Geräte eines Typs oder einer Serie das gleiche, vom Geräte-Hersteller erzeugte Zertifikat (und auch den gleichen privaten Schlüssel dazu) besitzen, mit dem sie sich als irgendein Gerät dieser Serie ausweisen können.

Eine andere Möglichkeit besteht darin, jedes Gerät mit einem individuellen privaten Schlüssel und einem eigenen digitalen Zertifikat auszustatten. Damit kann sich das Gerät als ein ganz bestimmtes Gerät mit einer eindeutigen Seriennummer ausweisen. Außerdem kann ein Angreifer, dem es gelingt den privaten Schlüssel eines Gerätes in Erfahrung zu bringen, nur das Zertifikat dieses einen Gerätes missbrauchen. Dieses Zertifikat kann dann wiederum leicht widerrufen werden. Andere Geräte der Serie sind weder vom Missbrauch noch vom Widerruf des Zertifikats betroffen. Solche Gerätezertifikate, die üblicherweise bereits während der Produktion in das Gerät eingebracht werden, können eine für Zertifikate recht lange Gültigkeitsdauer (z.B. die gleiche wie die Lebensdauer des Gerätes) haben und können als Vertrauensanker für das Ausrollen (Bootstrapping) weiterer, meist kurzlebiger Zertifikate für den operativen Betrieb verwendet werden.

Alternativ oder zusätzlich zu einem solchen Gerätezertifikat des Herstellers ("Hersteller-Geräte-Zertifikat") kann auch der Endkunde Interesse daran haben, ein dauerhaftes Geräte-zertifikat ("Kunden-Geräte-Zertifikat") von einer eigenen Certification Authority (CA) in das Gerät einbringen zu können, beispielsweise um dort zusätzliche Informationen sicher unterzubringen und/oder um einen vom Hersteller unabhängigen Vertrauensanker im Gerät zu besitzen. Da es vorkommen kann, dass der Kunde bei der Produktion eines Gerätes noch nicht bekannt ist, sondern Bestellung und Verkauf erst dann durchgeführt werden, wenn das Gerät bereits fertig produziert im Auslieferungslager liegt, muss der Hersteller eventuell schon in der Fertigung geeignete Vorbereitungen treffen, um seinem Kunden das Einbringen eines kundenspezifischen Gerätezertifikates zu ermöglichen. Zugleich wäre es für den Hersteller wünschenswert, einen Überblick über, durch den rechtmäßigen Besitzer eines Gerätes, eingebrachte Zertifikate zu haben. Beispielsweise können insbesondere seine kundenspezifischen Zertifikate eingebracht werden. Des Weiteren kann es von der Kundenseite her wünschenswert sein, ein selbst eingebrachtes Zertifikat von einer externen Quelle verifizieren und/oder absichern zu lassen.

Die US 8,850,208 B1 offenbart ein Verfahren zum Erzeugen eines Satzes von Authentifizierungszertifikaten durch einen Satz von Zertifizierungsstellenvorrichtungen, umfassend: das Empfangen eines Satzes von Zertifikatsanforderungen von einer Benutzervorrichtung durch den Satz von Zertifizierungsstellenvorrichtungen; das Erzeugen eines Satzes von überprüften Zertifikaten durch den Satz von Zertifizierungsstellenvorrichtungen, wobei jedes überprüfte Zertifikat des Satzes von überprüften Zertifikaten konfiguriert ist, um das verbleibende überprüfte Zertifikat des Satzes von überprüften Zertifikaten kryptographisch zu überprüfen; und das Übertragen des Satzes von geprüften Zertifikaten durch den Satz von Zertifizierungsstellenvorrichtungen an die Benutzervorrichtung, wobei der Satz von geprüften Zertifikaten konfiguriert ist, um von der Benutzervorrichtung beim Aufbau eines gesicherten Kommunikationskanals über ein Netzwerk zwischen der Benutzervorrichtung und einer Client-Vorrichtung verwendet zu werden. Die US 5,214,702 B offenbart ein kryptographisches System mit öffentlichem Schlüssel mit einer erweiterten Zertifizierung der digitalen Signatur, welche die Identität des Inhabers des öffentlichen Schlüssels authentifiziert. Dabei wird eine Hierarchie von verschachtelten Zertifizierungen und Signaturen verwendet, die die Autoritäts- und Verantwortungsebenen der Person angeben, deren Signatur zertifiziert wird, wobei ein Zertifizierer bei der Erstellung eines Zertifikats eine spezielle Nachricht erzeugt, die Felder enthält, die den zu zertifizierenden öffentlichen Schlüssel und den Namen des Zertifizierten identifizieren. Das Zertifikat wird vom Zertifizierer erstellt, um die Behörde zu definieren, die erteilt wird und die sich auf ein breites Spektrum von Genehmigungen, Delegationsaufgaben oder Einschränkungen beziehen kann, die dem Zertifizierer erteilt oder auf ihn übertragen wurden.

Die Spezifikation "Internet X.509 Public Key Infrastructure Certificate and Certificate Revocation List" (RfC 5280) der IETF beschreibt das Format und die Semantik von Zertifikaten und Zertifikatssperrlisten für Internet PKI. Dabei werden Verfahren zur Bearbeitung von Zertifizierungspfaden in der Internetumgebung beschrieben.

Vor diesem Hintergrund besteht eine Aufgabe der vorliegenden Erfindung darin, eine Verwendung von sicheren Kunden-Geräte-Zertifikaten auf Geräten zu ermöglichen.

Demgemäß wird eine Vorrichtung zum Verwenden eines Kunden-Geräte-Zertifikats auf einem Gerät vorgeschlagen. Die Vorrichtung weist eine Speichereinheit zum Speichern eines Hersteller-Geräte-Zertifikats und eine Verarbeitungseinheit zum Erstellen einer Zertifikatsanfrage für ein Kunden-Geräte-Zertifikat auf dem Gerät, wobei die Verarbeitungseinheit dazu eingerichtet ist, die Zertifikatsanfrage für das Kunden-Geräte-Zertifikat unter Verwendung des Hersteller-Geräte-Zertifikats zu erstellen, und eine Sende-Empfangseinheit zum Übertragen der erstellten Zertifikatsanfrage an eine erste, zu der Vorrichtung externe Recheneinheit, die dazu eingerichtet ist, ein Kunden-Geräte-Zertifikat zu erstellen und das erstellte Kunden-Geräte-Zertifikat an eine zweite zu der Vorrichtung externe Recheneinheit weiterzuleiten, die dazu eingerichtet ist, das erstellte Kunden-Geräte-Zertifikat mit einer Herstellersignatur überzusignieren, und zum Empfangen des übersignierten Kunden-Geräte-Zertifikats auf. Die Verarbeitungseinheit ist dazu eingerichtet, die Herstellersignatur basierend auf dem gespeicherten Hersteller-Geräte-Zertifikat zu überprüfen und in Abhängigkeit eines Ergebnisses des Überprüfens das Kunden-Geräte-Zertifikat zu verwenden, wobei die Sende-Empfangseinheit dazu eingerichtet ist, Daten für das zu erstellende Kunden-Geräte-Zertifikat von der ersten externen Recheneinheit vor dem Erstellen der Zertifikatsanfrage zu empfangen.

Die jeweilige Einheit, zum Beispiel Verarbeitungseinheit oder Sende-Empfangseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Durch die vorgeschlagene Vorrichtung ist es möglich, ein kunden- bzw. gerätespezifisches Zertifikat auch nach der Produktion, d.h. Herstellung eines Geräts, zu erstellen. Die Kontrolle des Herstellers über Zertifikate auf Geräten kann durch die zweite externe Recheneinheit beim Hersteller, die das von der ersten Recheneinheit beim Kunden erstellte Kunden-Geräte-Zertifikat übersigniert, aufrechterhalten werden. Auf diese Weise ist auch ein Austausch von Geräten zwischen verschiedenen Kunden nur eingeschränkt möglich, da kein Kunde Kunden-Geräte-Zertifikate für die von anderen Kunden erworbenen Geräte verwenden kann. Des Weiteren kann hierdurch ein Schutz vor Angreifern oder Diebstahl erreicht werden, da kein neues Gerätezertifikat auf das Gerät aufgebracht werden kann, ohne dass dies durch die zweite externe Recheneinheit, die dem Hersteller zuzuordnen ist, überprüft bzw. freigegeben wird.

Durch die vorgeschlagene Vorrichtung wird ein Bootstrapping eines Kunden-Geräte-Zertifikats eingeschränkt, so dass das Gerät nur Kunden-Geräte-Zertifikate akzeptiert, die von einer festen Stelle, d.h. der zweiten externen Recheneinheit, beim Hersteller bestätigt wurden. Diese Bestätigung erfolgt in Form einer Signatur des Herstellers, die dem Kunden-Geräte-Zertifikat beigefügt und zumindest beim Laden bzw. Aufspielen auf das Gerät von diesem geprüft wird. Die Vorrichtung kann hierbei direkt Teil des Geräts sein oder kann als eine Registrierungsstelle und/oder Zertifikatserstellungsstelle (registration authority bzw. certificate authority) auf der Herstellerseite implementiert werden. Nur wenn die Signatur des Herstellers bzw. der externen zweiten Recheneinheit vorhanden und gegen einen Vertrauensanker des Herstellers im Gerät geprüft werden kann, wird das von der ersten externen Recheneinheit erstellte Kunden-Geräte-Zertifikat vom Gerät akzeptiert und verwendet.

Die erste und die zweite externe Recheneinheit können dabei als Rechner oder Server implementiert sein, die extern zu der Vorrichtung und dem Gerät angeordnet ist. Eine Kommunikation zwischen der Vorrichtung und der ersten und/oder zweiten externen Recheneinheit kann dabei über ein (Online-) Kommunikationsnetzwerk erfolgen oder über andere Übertragungswege wie Email, Datenträger etc.

Gemäß einer Ausführungsform weist das Gerät eine Speichereinheit zum Speichern eines Hersteller-Geräte-Zertifikats auf, wobei die Verarbeitungseinheit dazu eingerichtet ist, die Zertifikatsanfrage für das Kunden-Geräte-Zertifikat unter Verwendung des Hersteller-Geräte-Zertifikats zu erstellen.

Die Verarbeitungseinheit kann dabei Informationen, die in dem Hersteller-Geräte-Zertifikat enthalten sind, zur Erstellung der Zertifikatsanfrage für das Kunden-Geräte-Zertifikat verwenden.

Das Hersteller-Geräte-Zertifikat kann bereits bei der Fertigung des Geräts in der Speichereinheit gespeichert werden. Alternativ kann es auch erst nachträglich empfangen und abgespeichert werden, beispielsweise bei einem Firmware-Update des Gerätes.

Gemäß einer weiteren Ausführungsform weist die Herstellersignatur das Kunden-Geräte-Zertifikat und weitere Informationen auf.

Diese Informationen können unter anderem Sicherheitsinformationen des Kunden sein, die in sicherer Weise an das Gerät übermittelt werden sollen. Beispiele hierfür sind das Zertifikat der ersten Recheneinheit, vertrauenswürdige Root-Zertifikate und Zertifikate von geplanten Kommunikationspartnern des Gerätes.

Gemäß einer weiteren Ausführungsform ist die Verarbeitungseinheit dazu eingerichtet, die Herstellersignatur basierend auf einem gespeicherten Herstellerzertifikat (als Vertrauensanker) zu überprüfen.

Das Herstellerzertifikat kann hierbei dazu dienen, die Signatur des Herstellers, d.h. der zweiten externen Recheneinheit, nach Empfang des übersignierten Kunden-Geräte-Zertifikats zu überprüfen.

Gemäß einer weiteren Ausführungsform ist die Sende-Empfangseinheit dazu eingerichtet, Daten für das zu erstellende Kunden-Geräte-Zertifikat von der ersten externen Recheneinheit vor dem Erstellen der Zertifikatsanfrage zu empfangen.

Diese Daten können beispielsweise Informationen über die zu verwendenden Algorithmen und Schlüssellängen und zu nutzender Zertifikatserweiterungen und deren Werte sein.

Gemäß einer weiteren Ausführungsform sind die Daten mit einer Signatur der ersten externen Recheneinheit signiert und ist die Verarbeitungseinheit dazu eingerichtet, die Signatur der ersten externen Recheneinheit zu überprüfen.

Auf diese Weise kann sichergestellt werden, dass die Daten zur Erstellung des Kunden-Geräte-Zertifikats von einer vertrauenswürdigen Stelle stammen. Die Gefahr einer Manipulation auf Herstellerseite bzw. durch eine externe Recheneinheit kann somit reduziert werden.

Gemäß einer weiteren Ausführungsform ist die Verarbeitungseinheit dazu eingerichtet, die Signatur der ersten externen Recheneinheit basierend auf den in dem Gerät gespeicherten Informationen zu überprüfen.

Beispielsweise können Schlüsselpaare bereits bei der Herstellung des Geräts erzeugt und verteilt werden. Alternativ können solche Schlüsselpaare auch nach der Herstellung erzeugt und in der Vorrichtung abgelegt werden.

Gemäß einer weiteren Ausführungsform ist die zweite externe Recheneinheit dazu eingerichtet, das von der ersten Recheneinheit erstellte Zertifikat zu überprüfen.

Die zweite externe Recheneinheit auf Herstellerseite prüft das von der ersten Recheneinheit auf Kundenseite erstellte Zertifikat, bevor sie es durch eine zusätzliche Signatur bestätigt. Auf diese Weise wird sichergestellt, dass nur zugelassene Zertifikate auf einem Gerät installiert werden können. Falls diese Überprüfung negativ ausfällt, kann eine Fehlermeldung an die erste externe Recheneinheit zurückgesendet werden.

Gemäß einem weiteren Aspekt wird ein System vorgeschlagen, welches eine zweite externe Recheneinheit zum Überprüfen eines von einer ersten externen Recheneinheit empfangenen Zertifikats und für das Signieren des empfangenen Zertifikats mit einer Herstellersignatur und eine wie oben beschriebene Vorrichtung zum Verwenden eines Zertifikats auf einem Gerät aufweist, wobei die Sende-Empfangseinheit der Vorrichtung dazu eingerichtet ist, Daten für das zu erstellende Kunden-Geräte-Zertifikat von der ersten externen Recheneinheit vor dem Erstellen einer Zertifikatsanfrage zu empfangen sowie ein von einer ersten Recheneinheit erhaltenes Zertifikat an die zweite externe Recheneinheit zu übertragen und ein übersigniertes Zertifikat von der zweiten externen Recheneinheit zu empfangen.

Die für die vorgeschlagene Vorrichtung beschriebenen Ausführungsformen und Merkmale gelten für das vorgeschlagene System entsprechend.

Gemäß einer Ausführungsform ist die zweite externe Recheneinheit dazu eingerichtet, eine Gerätesignatur des empfangenen Zertifikats zu überprüfen.

Falls die Gerätesignatur nicht verifiziert werden kann, kann das empfangene Zertifikat verworfen und eine Fehlermeldung an die Vorrichtung gesendet werden. Auf diese Weise kann sichergestellt werden, dass nur von bestimmten, der zweiten externen Recheneinheit bekannten Geräten, Zertifikate übersigniert werden.

Gemäß einer weiteren Ausführungsform ist die erste externe Recheneinheit dazu eingerichtet, einen öffentlichen Schlüssel des Geräts zu signieren und den signierten öffentlichen Schlüssel an die zweite externe Recheneinheit zu übertragen.

Die zweite externe Recheneinheit kann dann unter Verwendung eines öffentlichen Schlüssels oder eines Zertifikats der ersten externen Recheneinheit die Signatur des Kunden-Geräte-Zertifikats von der ersten externen Recheneinheit überprüfen.

Gemäß einem weiteren Aspekt wird ein Verfahren zum Verwenden eines Kunden-Geräte-Zertifikats auf einem Gerät vorgeschlagen. Das Verfahren weist die folgenden Schritte auf: Empfangen, seitens des Geräts, von Daten für ein zu erstellendes Kunden-Geräte-Zertifikat von einer ersten externen Recheneinheit vor dem Erstellen einer Zertifikatsanfrage, Erstellen der Zertifikatsanfrage für das Kunden-Geräte-Zertifikat auf dem Gerät, wobei die Zertifikatsanfrage für das Kunden-Geräte-Zertifikat unter Verwendung eines auf dem Gerät gespeicherten Hersteller-Geräte-Zertifikats erstellt wird, Übertragen der erstellten Zertifikatsanfrage an die erste externe Recheneinheit, die dazu eingerichtet ist, ein Kunden-Geräte-Zertifikat zu erstellen und das erstellte Kunden-Geräte-Zertifikat an eine zweite externe Recheneinheit weiterzuleiten, die das erstellte Kunden-Geräte-Zertifikat mit einer Herstellersignatur übersigniert, Empfangen des übersignierten Kunden-Geräte-Zertifikats , Überprüfen der Herstellersignatur basierend auf dem im Gerät gespeicherten Hersteller-Geräte-Zertifikat, und Verwenden des Kunden-Geräte-Zertifikats in Abhängigkeit eines Ergebnisses des Überprüfens.

Die für die vorgeschlagene Vorrichtung und das System beschriebenen Ausführungsformen und Merkmale gelten für das vorgeschlagene Verfahren entsprechend.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagramm eines Ausführungsbeispiels einer Vorrichtung zum Verwenden eines Kunden-Geräte-Zertifikats für ein Gerät;
- Fig. 2: zeigt ein schematisches Ablaufdiagramm eines Ausführungsbeispiels eines Verfahrens zum Verwenden eines Kunden-Geräte-Zertifikats für ein Gerät;
- Fig. 3: zeigt ein schematisches Ablaufdiagramm eines Teils eines Verfahrens zum Verwenden eines Kunden-Geräte-Zertifikats während der Herstellung des Geräts;
- Fig. 4: zeigt ein schematisches Ablaufdiagramm eines weiteren Ausführungsbeispiels eines Verfahrens zum Verwenden eines Kunden-Geräte-Zertifikats für ein Gerät;
- Fig. 5: zeigt ein schematisches Ablaufdiagramm eines weiteren Ausführungsbeispiels eines Verfahrens zum Verwenden eines Kunden-Geräte-Zertifikats für ein Gerät;
- Fig.6: zeigt ein schematisches Ablaufdiagramm eines Teils des Verfahrens zum Verwenden eines Kunden-Geräte-Zertifikats bei der Annahme eines Kunden-Geräte-Zertifikats im Gerät;
- Fig. 7: zeigt ein schematisches Ablaufdiagramm eines weiteren Ausführungsbeispiels eines Verfahrens zum Verwenden eines Kunden-Geräte-Zertifikats für ein Gerät; und
- Fig. 8: zeigt ein schematisches Ablaufdiagramm eines Teils des Verfahrens zum Verwenden eines Kunden-Geräte-Zertifikats bei der Annahme eines Kunden-Geräte-Zertifikats im Gerät.

In den Figuren sind gleiche oder funktionsgleiche Elemente mit denselben Bezugszeichen versehen worden, sofern nichts anderes angegeben ist.

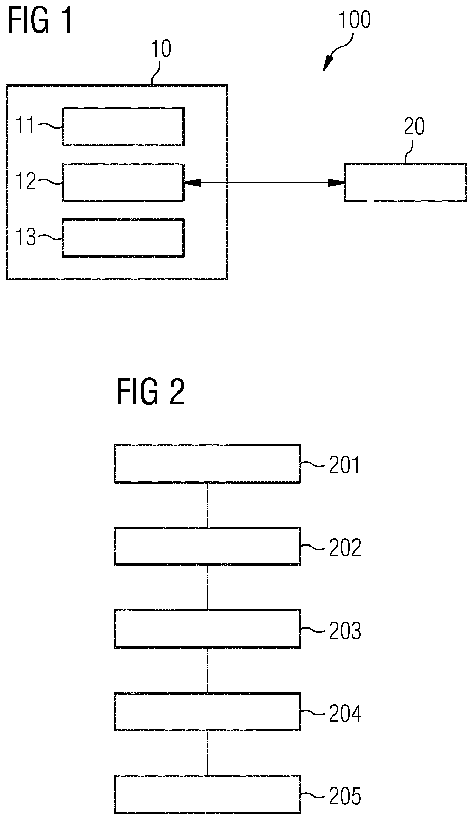

Fig. 1 zeigt ein System 100 mit einer Vorrichtung 10 zum Verwenden eines Kunden-Geräte-Zertifikats auf einem Gerät. Die Vorrichtung 10 weist eine Verarbeitungseinheit 11, eine Sende-Empfangseinheit 12 und eine Speichereinheit 13 auf.

Zunächst erstellt die Verarbeitungseinheit 11 eine Zertifikatsanfrage für ein Kunden-Geräte-Zertifikat. Die Sende-Empfangseinheit 11 überträgt die erstellte Zertifikatsanfrage an eine erste zu der Vorrichtung 10 externe Recheneinheit 30 (in Fig. 1 nicht gezeigt). Die erste externe Recheneinheit 30 ist dazu eingerichtet, ein Kunden-Geräte-Zertifikat zu erstellen und das erstellte Kunden-Geräte-Zertifikat an eine zweite externe Recheneinheit 20 weiterzuleiten, die das Kunden-Geräte-Zertifikat mit einer Herstellersignatur übersigniert. Die Sende-Empfangseinheit 12 empfängt dann das übersignierte Kunden-Geräte-Zertifikat.

Die Verarbeitungseinheit 11 überprüft die Herstellersignatur basierend auf in der Speichereinheit 13 gespeicherten Informationen. Bei einem positiven Ergebnis der Überprüfung kann das Kunden-Geräte-Zertifikat verwendet werden. Andernfalls kann das Kunden-Geräte-Zertifikat verworfen bzw. gelöscht werden.

Fig. 2 zeigt ein Verfahren zum Verwenden eines Kunden-Geräte-Zertifikats auf einem Gerät. Das Verfahren weist die Schritte 201 bis 205 auf.

In Schritt 201 wird eine Zertifikatsanfrage für ein Kunden-Geräte-Zertifikat auf dem Gerät erstellt.

In Schritt 202 wird die erstellte Zertifikatsanfrage an eine erste externe Recheneinheit 30 übertragen. Diese ist dazu eingerichtet, ein Kunden-Geräte-Zertifikat zu erstellen und das erstellte Kunden-Geräte-Zertifikat an eine zweite externe Recheneinheit 20 weiterzuleiten, die das erstellte Kunden-Geräte-Zertifikat mit einer Herstellersignatur übersigniert.

In Schritt 203 wird das übersignierte Kunden-Geräte-Zertifikat empfangen.

In Schritt 204 wird die Herstellersignatur basierend auf in dem Gerät gespeicherten Informationen überprüft.

In Schritt 205 wird das Kunden-Geräte-Zertifikat in Abhängigkeit eines Ergebnisses des Überprüfens verwendet.

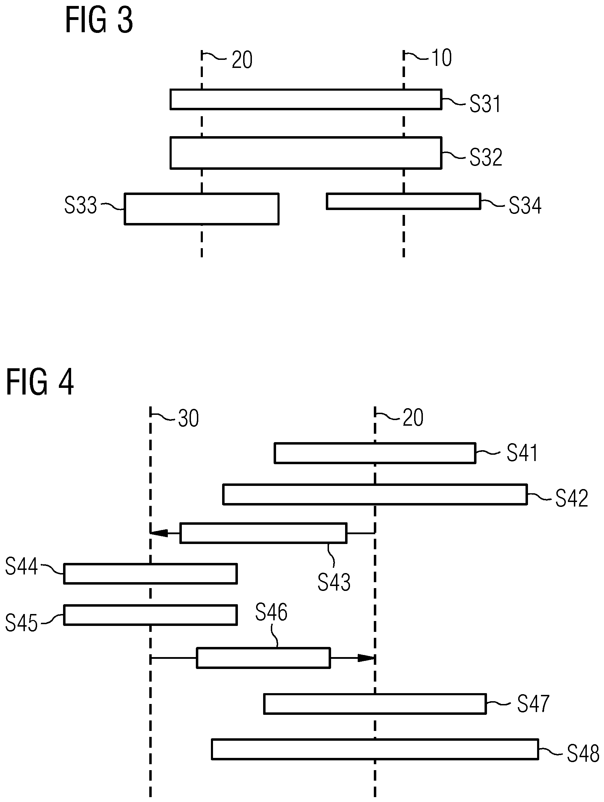

In den Figuren 3 bis 8 sind beispielhaft verschiedene Abläufe zur Verwendung eines Geräts gezeigt. Diese können auch in verschiedenen Kombinationen verwendet werden. In diesem Zusammenhang werden die Begriffe CA (Certification Authority) des Kunden bzw. erste externe Vorrichtung 30 synonym verwendet. Des Weiteren werden die Begriffe Hersteller, Vertriebsrechner, Fertigungsrechner sowie zweite externe Recheneinheit 20 synonym verwendet.

Fig. 3 zeigt den Ablauf während der Herstellung bzw. Fertigung eines Geräts 10.

In Schritt S31 wird optional ein Hersteller-Geräte-Zertifikat von einer Zertifizierungsstelle des Herstellers 20 erzeugt und in das Gerät 10 eingebracht. Dies kann beispielsweise mit Aufspielen der Firmware erfolgen.

In Schritt S32 werden ein Schlüsselpaar und eine Anfrage (certificate signing request, CSR) zur Beantragung eines Kunden-Geräte-Zertifikats erstellt. Insbesondere wenn der Kunde einen Hersteller-unabhängigen Vertrauensanker im Gerät 10 benötigt oder fordert, sollte der private Schlüssel nur im Gerät 10 erzeugt werden und dieses niemals verlassen. Der öffentliche Schlüssel wird von dem Fertigungsrechner 20 (Imprinting Station für Hersteller-Gerätezertifikate, Prüfrechner für Qualitätskontrolle, o.ä.) in der Fertigung ausgelesen. Alternativ kann das Schlüsselpaar auch z.B. in diesem Fertigungsrechner 20 erzeugt werden, und der private Schlüssel wird dann in das Gerät übertragen und anschließend außerhalb gelöscht.

Der öffentliche Schlüssel wird in Schritt S33 in dem Fertigungsrechner 20 und der private Schlüssel in Schritt S34 in dem Gerät 10 gespeichert. Der öffentliche Schlüssel wird außerhalb des Gerätes 10, beispielsweise in einer Datenbank des Fertigungsrechners 20 (oder in SAP) abgelegt. Das Schlüsselpaar, insbesondere der private Schlüssel, wird nur im Gerät 10 gespeichert. Neben dem öffentlichen Schlüssel des Geräts 10 können weitere Informationen über das Gerät (z.B. Hersteller, Typ, Seriennummer), die möglicherweise später in das Kunden-Geräte-Zertifikat eingebaut werden sollen, gespeichert werden. Diese Daten können beispielsweise auch in Form eines selbstsignierten CSRs oder eines mit dem Hersteller-Geräte-Zertifikat signierten Containers abgelegt werden.

Fig. 4 zeigt den weiteren Ablauf nach Verkauf eines Geräts 10.

Wird das Gerät 10 an einen Kunden verkauft, so holt eine Stelle beim Hersteller, im Folgenden Vertriebsrechner 20 genannt, den öffentlichen Schlüssel des Gerätes 10 in Schritt S41 aus der Datenbank, fügt bei Bedarf weitere Daten zum öffentlichen Schlüssel hinzu und/oder passt vorhandene Daten (z.B. subject name) an und signiert diese (S42). Eventuell erstellt der Vertriebsrechner 20 auch einen neuen, modifizierten CSR, kann diesen aber nicht mit dem privaten Schlüssel des Gerätes 10, der nur noch im Gerät 10 gespeichert ist, signieren.

Der Vertriebsrechner 20 überträgt nun in Schritt S43 den öffentlichen Schlüssel des Gerätes 10 inklusive aller zusätzlichen Daten zum Kunden, um ein Kunden-Geräte-Zertifikat für das Gerät zu beantragen. Die Stelle 30 des Kunden, welche die Daten in Empfang nimmt, kann beispielsweise eine Registration Authority (RA) im Netzwerk des Kunden sein, oder auch eine lokale Registration Authority (Kunden-LRA) im Netzwerk des Herstellers 20, welche dem Hersteller vom Kunden zur Verfügung gestellt wird. Die Stelle 30 stellt dabei die erste externe Vorrichtung 30 dar.

Die Übertragung erfolgt vorzugsweise über eine gesicherte Verbindung (TLS, IPsec) und/oder in einem besonders geschützten, d.h. vom Vertriebsrechner 20 und/oder der Kunden-LRA, signierten Transportcontainer oder -protokoll.

Die CA (oder eine vorgeschaltete RA) des Kunden überprüft die Signatur des Herstellers 20 in Schritt S44 und fügt bei Bedarf weitere Daten hinzu und/oder passt vorhandene Daten an. Anschließend erzeugt die CA ein Kunden-Geräte-Zertifikat für das Gerät 10 (S45). Anschließend wird dieses Kunden-Geräte-Zertifikat an den Vertriebsrechner 20 zurückgesendet (S46).

Dieser prüft (S47), ob das Kunden-Geräte-Zertifikat von einer bekannten und zulässigen CA 30 des richtigen Kunden erstellt wurde und ob die richtigen Attribute enthalten sind: falls nicht, wird es verworfen und eine Fehlermeldung an einen Administrator und/oder die Kunden-RA/-CA 30 gesendet. Nach erfolgreicher Prüfung wird das Kunden-Geräte-Zertifikat vom Vertriebsrechner 20 mit einer weiteren, eigenen Signatur versehen und gespeichert (S48).

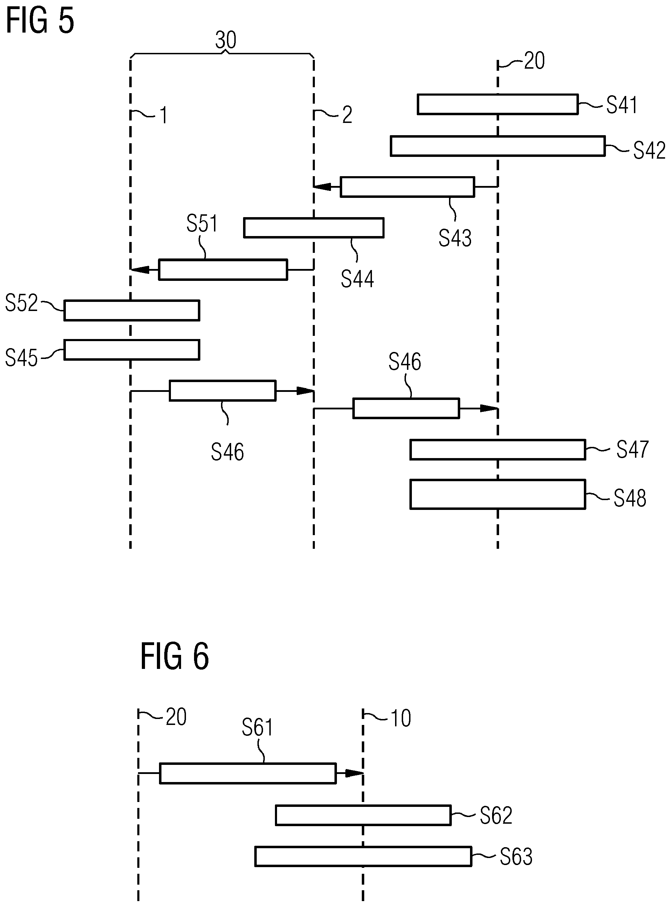

Fig. 5 zeigt einen beispielhaften Ablauf bei dem Verkauf, wenn der Kunde 30 dem Hersteller 20 eine lokale Registration Authority (LRA) 2 bereitstellt. In diesem Fall würde in einem zusätzlichen Schritt S51 ein durch die LRA 2 signierter Datensatz, der auf den in Schritt S42 erzeugten Daten basiert, an die Registration Authority (RA) 1 des Kunden übersendet, die wiederum in Schritt S52 die LRA-Signatur überprüft. Das erstellte Zertifikat würde dann in Schritt S46 über die LRA 2 an den Vertriebsrechner 20 gesendet werden.

Ist der Kunde des Gerätes 10 während der Fertigung schon bekannt, so können Fertigungsrechner und Vertriebsrechner zusammenfallen. Das Kunden-Geräte-Zertifikat kann dann prinzipiell sogar schon in der Fertigung (oder auch im Lager des Herstellers) in das Gerät 10 eingespielt werden.

Wird das Gerät 10 im Feld oder einer Testanlage installiert, wird das Kunden-Geräte-Zertifikat auf das Gerät 10 gebracht (falls es nicht schon vorher eingespielt wurde), wie es in Fig. 6 gezeigt ist. Dies kann beispielsweise auf Initiative des Geräts 10 per automatischen Download von einem Server im Netzwerk erfolgen, oder durch Einspielen über eine Wartungs- oder Administrationsschnittstelle durch einen Techniker. Das Gerät 10 prüft das in Schritt S61 erhaltene Kunden-Geräte-Zertifikat, ob es über eine Bestätigung (Signatur) des Herstellers 20 verfügt (Schritt S62). Falls ja, wird es akzeptiert (S63).

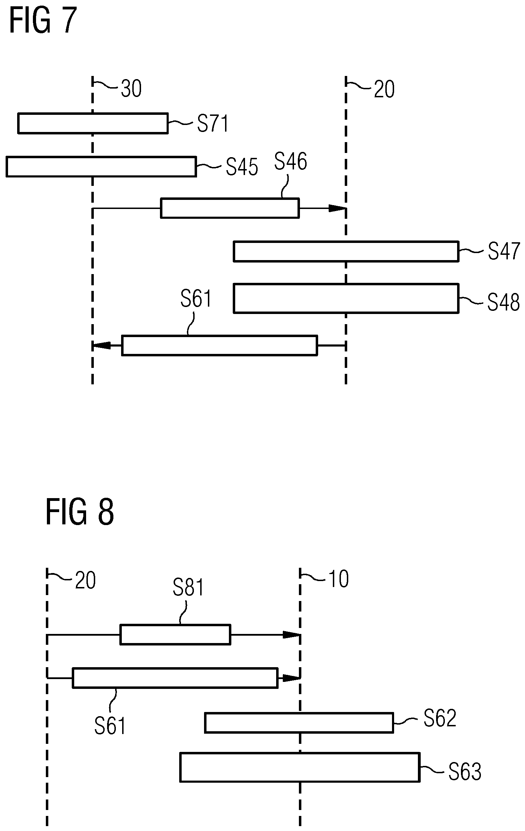

In einer alternativen Ausführungsform kann das Schlüsselpaar direkt beim Kunden erzeugt werden, wie es in Fig. 7 gezeigt ist. Dies hat für den Kunden den Vorteil, dass er vollständig unabhängig ist vom Hersteller 20. Der Kunde kann die Qualität der erzeugten Schlüssel selbst sicherstellen, und der Hersteller 20 erfährt die privaten Schlüssel nicht. Dazu erzeugt die CA 30 Schlüsselpaar und Zertifikat für jedes Gerät (S71). Das Zertifikat wird anschließend zum Hersteller gesandt (S46), der es prüft (S47), gegebenenfalls übersigniert (S48) und an den Kunden zurücksendet (S61).

Beim Einspielen in das Gerät 10 ist zu beachten, dass zusätzlich zum Kunden-Geräte-Zertifikat auch der zugehörige private Schlüssel in sicherer Wiese eingespielt werden muss. Dies ist in Fig. 8, Schritt S81 gezeigt.

Obwohl die vorliegende Erfindung anhand von Ausführungsbeispielen beschrieben wurde, ist sie vielfältig modifizierbar.

## Patentansprüche

1. Vorrichtung (10) zum Verwenden eines Kunden-Geräte-Zertifikats auf einem Gerät, mit:
einer Speichereinheit (13) zum Speichern eines Hersteller-Geräte-Zertifikats,
einer Verarbeitungseinheit (11) zum Erstellen einer Zertifikatsanfrage für ein Kunden-Geräte-Zertifikat auf dem Gerät, wobei die Verarbeitungseinheit (11) dazu eingerichtet ist, die Zertifikatsanfrage für das Kunden-Geräte-Zertifikat unter Verwendung des Hersteller-Geräte-Zertifikats zu erstellen, und
einer Sende-Empfangseinheit (12) zum Übertragen der Zertifikatsanfrage an eine erste zu der Vorrichtung (10) externe Recheneinheit (30), die dazu eingerichtet ist, ein Kunden-Geräte-Zertifikat zu erstellen und das erstellte Kunden-Geräte-Zertifikat an eine zweite zu der Vorrichtung (10) externe Recheneinheit (20) weiterzuleiten, die dazu eingerichtet ist, das erstellte Kunden-Geräte-Zertifikat mit einer Herstellersignatur überzusignieren, und zum Empfangen des übersignierten Kunden-Geräte-Zertifikats,
wobei die Verarbeitungseinheit (11) dazu eingerichtet ist, die Herstellersignatur basierend auf dem gespeicherten Hersteller-Geräte-Zertifikat zu überprüfen und in Abhängigkeit eines Ergebnisses des Überprüfens das übersignierte Kunden-Geräte-Zertifikat zu verwenden,
wobei die Sende-Empfangseinheit (12) dazu eingerichtet ist, Daten für das zu erstellende Kunden-Geräte-Zertifikat von der ersten externen Recheneinheit (30) vor dem Erstellen der Zertifikatsanfrage zu empfangen.

2. Vorrichtung nach Anspruch 1,
**dadurch gekennzeichnet, dass** die Herstellersignatur das Kunden-Geräte-Zertifikat und weitere Informationen aufweist.

3. Vorrichtung nach Anspruch 1 oder 2,
**dadurch gekennzeichnet, dass** die Daten mit einer Signatur der ersten externen Recheneinheit (30) signiert sind und dass die Verarbeitungseinheit (11) dazu eingerichtet ist, die Signatur der ersten externen Recheneinheit (30) zu überprüfen.

4. Vorrichtung nach Anspruch 3,
**dadurch gekennzeichnet, dass** die Verarbeitungseinheit (11) dazu eingerichtet ist, die Signatur der ersten externen Recheneinheit (30) basierend auf den in dem Gerät gespeicherten Informationen zu überprüfen.

5. Vorrichtung nach einem der Ansprüche 1 - 4,
**dadurch gekennzeichnet, dass** die zweite externe Recheneinheit (20) dazu eingerichtet ist, das von der ersten externen Recheneinheit (30) erstellte Kunden-Geräte-Zertifikat zu überprüfen.

6. System (100), mit:
einer zweiten externen Recheneinheit (20) zum Überprüfen eines von einer ersten externen Recheneinheit (30) empfangenen Kunden-Geräte-Zertifikats und Signieren des empfangenen Kunden-Geräte-Zertifikats mit einer Herstellersignatur, und
einer Vorrichtung (10) zum Verwenden eines Kunden-Geräte-Zertifikats auf einem Gerät nach einem der Ansprüche 1 - 5, wobei die Sende-Empfangseinheit (12) der Vorrichtung (10) dazu eingerichtet ist, Daten für das zu erstellende Kunden-Geräte-Zertifikat von der ersten externen Recheneinheit (30) vor dem Erstellen einer Zertifikatsanfrage zu empfangen sowie ein von der ersten externen Recheneinheit (30) erstelltes Kunden-Geräte-Zertifikat und von der zweiten externen Recheneinheit (20) übersigniertes Kunden-Geräte-Zertifikat von der zweiten externen Recheneinheit (20) zu empfangen.

7. System nach Anspruch 6,
**dadurch gekennzeichnet, dass** die zweite externe Recheneinheit (20) dazu eingerichtet ist, eine Gerätesignatur des empfangenen Kunden-Geräte-Zertifikats zu überprüfen.

8. System nach Anspruch 6 oder 7,
**dadurch gekennzeichnet, dass** die erste externe Recheneinheit (30) dazu eingerichtet ist, einen öffentlichen Schlüssel des Geräts zu signieren und den signierten öffentlichen Schlüssel an die Vorrichtung (10) zu übertragen.

9. Verfahren zum Verwenden eines Zertifikats auf einem Gerät, mit:
Empfangen, seitens des Geräts, von Daten für ein zu erstellendes Kunden-Geräte-Zertifikat von einer ersten externen Recheneinheit (30) vor dem Erstellen einer Zertifikatsanfrage,
Erstellen (201) der Zertifikatsanfrage für das Kunden-Geräte-Zertifikat auf dem Gerät, wobei die Zertifikatsanfrage für das Kunden-Geräte-Zertifikat unter Verwendung eines auf dem Gerät gespeicherten Hersteller-Geräte-Zertifikats erstellt wird,
Übertragen (202) der erstellten Zertifikatsanfrage an die erste externe Recheneinheit (30), die dazu eingerichtet ist, ein Kunden-Geräte-Zertifikat zu erstellen und das erstellte Kunden-Geräte-Zertifikat an eine zweite externe Recheneinheit (20) weiterzuleiten, die das erstellte Kunden-Geräte-Zertifikat mit einer Herstellersignatur übersigniert,
Empfangen (203) des übersignierten Kunden-Geräte-Zertifikats,
Überprüfen (204) der Herstellersignatur basierend auf dem im Gerät gespeicherten Hersteller-Geräte-Zertifikat, und
Verwenden (205) des Kunden-Geräte-Zertifikats in Abhängigkeit eines Ergebnisses des Überprüfens.

10. Computerprogrammprodukt, welches auf einer programmgesteuerten Einrichtung die Durchführung des Verfahrens nach Anspruch 9 veranlasst.

## Claims

1. Apparatus (10) for using a customer device certificate on a device, with:
a storage unit (13) for storing a manufacturer's device certificate,
a processing unit (11) for generating a certificate request for a customer device certificate on the device, wherein the processing unit (11) is configured to generate the certificate request for the customer device certificate using the manufacturer's device certificate, and
a transmitter-receiver unit (12) for transmitting the certificate request to a first computing unit (30) external to the apparatus (10), the first computing unit (30) being configured to generate a customer device certificate and to forward the generated customer device certificate to a second computing unit (20) external to the apparatus (10), the second computing unit (20) being configured to re-sign the generated customer device certificate with a manufacturer's signature, and for receiving the re-signed customer device certificate,
wherein the processing unit (11) is configured to check the manufacturer's signature based on the stored manufacturer's device certificate and to use the re-signed customer device certificate depending on a result of the check,
wherein the transmitter-receiver unit (12) is configured to receive data for the customer device certificate to be generated from the first external computing unit (30) before the certificate request is generated.

2. Apparatus according to Claim 1, **characterized in that** the manufacturer's signature comprises the customer device certificate and further information.

3. Apparatus according to Claim 1 or 2, **characterized in that** the data are signed with a signature of the first external computing unit (30) and **in that** the processing unit (11) is configured to check the signature of the first external computing unit (30).

4. Apparatus according to Claim 3, **characterized in that** the processing unit (11) is configured to check the signature of the first external computing unit (30) based on the information stored in the device.

5. Apparatus according to one of Claims 1-4, **characterized in that** the second external computing unit (20) is configured to check the customer device certificate generated by the first external computing unit (30).

6. System (100), with:
a second external computing unit (20) for checking a customer device certificate received from a first external computing unit (30) and signing the received customer device certificate with a manufacturer's signature, and
an apparatus (10) for using a customer device certificate on a device according to one of Claims 1-5, wherein the transmitter-receiver unit (12) of the apparatus (10) is configured to receive data for the customer device certificate to be generated from the first external computing unit (30) before the certificate request is generated and to receive a customer device certificate generated by the first external computing unit (30) and customer device certificate re-signed by the second external computing unit (20) from the second external computing unit (20).

7. System according to Claim 6, **characterized in that** the second external computing unit (20) is configured to check a device signature of the received customer device certificate.

8. System according to Claim 6 or 7, **characterized in that** the first external computing unit (30) is configured to sign a public key of the device and to transmit the signed public key to the apparatus (10).

9. Method for using a certificate on a device, involving:
receiving, on the device, data for a customer device certificate to be generated from a first external computing unit (30) before a certificate request is generated,
generating (201) the certificate request for the customer device certificate on the device, wherein the certificate request for the customer device certificate is generated using a manufacturer's device certificate stored on the device,
transmitting (202) the generated certificate request to the first external computing unit (30) which is configured to generate a customer device certificate and to forward the generated customer device certificate to a second external computing unit (20), which re-signs the generated customer device certificate with a manufacturer's signature,
receiving (203) the re-signed customer device certificate,
checking (204) the manufacturer's signature based on the manufacturer's device certificate stored in the device, and
using (205) the customer device certificate depending on a result of the check.

10. Computer program product which initiates the execution of the method according to Claim 9 on a program-controlled unit.

## Revendications

1. Dispositif (10) d'emploi d'un certificat d'appareil de client sur un appareil, comportant :
une unité de mémoire (13) pour sauvegarder un certificat d'appareil de fabricant,
une unité de traitement (11) pour créer une requête de certificat pour un certificat d'appareil de client sur l'appareil, l'unité de traitement (11) étant configurée pour créer la requête de certificat pour le certificat d'appareil de client en utilisant le certificat d'appareil de fabricant, et
une unité émettrice-réceptrice (12) pour transmettre la requête de certificat à une première unité de calcul (30) externe au dispositif (10) qui est configurée pour créer un certificat d'appareil de client et pour retransmettre le certificat d'appareil de client créé à une deuxième unité de calcul (20) externe au dispositif (10) qui est configurée pour sursigner le certificat d'appareil de client créé avec une signature de fabricant et pour recevoir le certificat d'appareil de client sursigné,
l'unité de traitement (11) étant configurée pour vérifier la signature de fabricant sur la base du certificat d'appareil de fabricant sauvegardé et pour utiliser le certificat d'appareil de client sursigné en fonction d'un résultat de la vérification,
l'unité émettrice-réceptrice (12) étant configurée pour recevoir des données pour le certificat d'appareil de client à créer de la première unité de calcul externe (30) avant la création de la requête de certificat.

2. Dispositif selon la revendication 1, **caractérisé en ce que** la signature de fabricant comporte le certificat d'appareil de client et d'autres informations.

3. Dispositif selon la revendication 1 ou 2, **caractérisé en ce que** les données sont signées avec une signature de la première unité de calcul externe (30) et **en ce que** l'unité de traitement (11) est configurée pour vérifier la signature de la première unité de calcul externe (30).

4. Dispositif selon la revendication 3, **caractérisé en ce que** l'unité de traitement (11) est configurée pour vérifier la signature de la première unité de calcul externe (30) sur la base des informations sauvegardées dans l'appareil.

5. Dispositif selon l'une des revendications 1 - 4, **caractérisé en ce que** la deuxième unité de calcul externe (20) est configurée pour vérifier le certificat d'appareil de client créé par la première unité de calcul externe (30).

6. Système (100) comportant :
une deuxième unité de calcul externe (20) pour vérifier un certificat d'appareil de client reçu d'une première unité de calcul externe (30) et pour signer le certificat d'appareil de client reçu avec une signature de fabricant, et
un dispositif (10) pour utiliser un certificat d'appareil de client sur un appareil selon l'une des revendications 1 - 5, l'unité émettrice-réceptrice (12) du dispositif (10) étant configurée pour recevoir des données pour le certificat d'appareil de client à créer de la première unité de calcul externe (30) avant la création d'une requête de certificat ainsi que pour recevoir un certificat d'appareil de client créé par la première unité de calcul externe (30), et un certificat d'appareil de client sursigné par la deuxième unité de calcul externe (20), de la deuxième unité de calcul externe (20).

7. Système selon la revendication 6, **caractérisé en ce que** la deuxième unité de calcul externe (20) est configurée pour vérifier une signature d'appareil du certificat d'appareil de client reçu.

8. Système selon la revendication 6 ou 7, **caractérisé en ce que** la première unité de calcul externe (30) est configurée pour signer une clé publique de l'appareil et pour transmettre la clé publique signée au dispositif (10).

9. Procédé pour utiliser un certificat sur un appareil, comportant :
réception, du côté de l'appareil, de données pour un certificat d'appareil de client à créer d'une première unité de calcul externe (30) avant la création d'une requête de certificat,
création (201) de la requête de certificat pour le certificat d'appareil de client sur l'appareil, la requête de certificat pour le certificat d'appareil de client étant créée en utilisant un certificat d'appareil de fabricant sauvegardé sur l'appareil,
transmission (202) de la requête de certificat créée à la première unité de calcul externe (30), laquelle est configurée pour créer un certificat d'appareil de client et pour retransmettre le certificat d'appareil de client créé à une deuxième unité de calcul externe (20) qui sursigne le certificat d'appareil de client créé avec une signature de fabricant,
réception (203) du certificat d'appareil de client sursigné, vérification (204) de la signature de fabricant sur la base du certificat d'appareil de fabricant sauvegardé dans l'appareil et
utilisation (205) du certificat d'appareil de client en fonction d'un résultat de la vérification.

10. Produit de programme informatique qui fait exécuter le procédé selon la revendication 9 sur un dispositif commandé par programme.
